Europäisches Patentamt

European Patent Office

Office européen des brevets

(19)

(11) Numéro de publication: **0 186 559**
**B1**

(12) **FASCICULE DE BREVET EUROPEEN**

(45) Date de publication du fascicule du brevet:
22.08.90

(21) Numéro de dépôt: 85402372.8

(22) Date de dépôt: 02.12.85

(51) Int. Cl.⁵: **F24F 11/02**, F24F 11/00,
G21F 7/04, F16K 17/12

(54) Dispositif de ventilation d'une enceinte confinée.

(30) Priorité: 11.12.84 FR 8418901

(43) Date de publication de la demande:
02.07.86 Bulletin 86/27

(45) Mention de la délivrance du brevet:
22.08.90 Bulletin 90/34

(84) Etats contractants désignés:
BE DE GB

(56) Documents cités:
FR-A- 1 333 220
FR-A- 1 423 883
FR-A- 2 541 748

(73) Titulaire: COMPAGNIE GENERALE DES MATIERES
NUCLEAIRES (COGEMA), 2, rue Paul Dautier B.P. 4,
F-78141 Velizy-Villacoublay(FR)

(72) Inventeur: Pruchon, Philippe, Les Amandines,
F-30200 Bagnols Sur Ceze(FR)

(74) Mandataire: Mongrédien, André et al, c/o
BREVATOME 25, rue de Ponthieu, F-75008 Paris(FR)

ACTORUM AG

**Description**

La présente invention se rapporte au domaine de la ventilation des enceintes confinées et a plus spécialement pour objet un dispositif de sécurité pour assurer un débit d'air convenable en cas de variation accidentelle de la pression à l'intérieur de l'enceinte, qui soit moins encombrant que les dispositifs de l'art antérieur.

Dans certaines industries telles que l'industrie nucléaire ou l'industrie pharmaceutique, les procédés de fabrication nécessitent un confinement vis-à-vis de l'air ambiant, soit pour éviter une propagation des produits contaminants vers l'atmosphère, soit une introduction de polluants contenus dans l'atmosphère vers l'endroit où se déroule le procédé de fabrication. C'est pourquoi on opère à l'intérieur d'enceintes de confinement telles que, par exemple, des boîtes à gants. Ces enceintes sont ventilées par des réseaux de ventilation qui permettent de contrôler le débit et la pression régnant dans chacune d'elles. Sur le réseau de ventilation, à l'introduction et à l'extraction d'air, sont disposées une ou plusieurs barrières de filtration à très haute efficacité afin d'arrêter les poussières polluantes ou radioactives.

En plus des dispositifs nécessaires au réglage du débit et de la pression dans l'enceinte (vanne manuelle ou vanne de régulation), il est souvent indispensable de prévoir des équipements complémentaires de sécurité permettant de pallier les incidents d'exploitation et de maintenir l'intégrité de l'enceinte.

Un incident qui peut parfois se produire est la rupture accidentelle ou non de la paroi de l'enceinte. Par exemple, lorsque la paroi est munie de gants, il peut arriver qu'un des gants se détériore ou s'échappe de son collier de fixation. Dans ce cas, l'enceinte est munie d'un second dispositif de ventilation permettant d'aspirer ou de souffler suivant le cas un débit complémentaire beaucoup plus important que le débit nominal. Ce débit, appelé "débit de sécurité", induit à travers l'orifice créé une vitesse d'air élevée évitant tout transfert de polluant. Ce circuit peut comporter par exemple une vanne à ouverture totale pilotée par la pression dans l'enceinte, ce circuit de sécurité étant bien entendu équipé lui aussi d'une ou plusieurs barrières de filtration à très haute efficacité. En fonctionnement normal, ces filtres doivent être protégés de tout colmatage pour laisser passer, en cas de besoin, la totalité du débit de sécurité.

Un autre incident qui peut survenir est une augmentation excessive de la dépression dans l'enceinte, par exemple en cas de fermeture intempestive des vannes sur le circuit de ventilation, ce qui peut mettre en danger l'intégrité des parois. En prévision de ce type d'incident, l'enceinte est équipée d'une autre soupape de sécurité mécanique ou hydraulique.

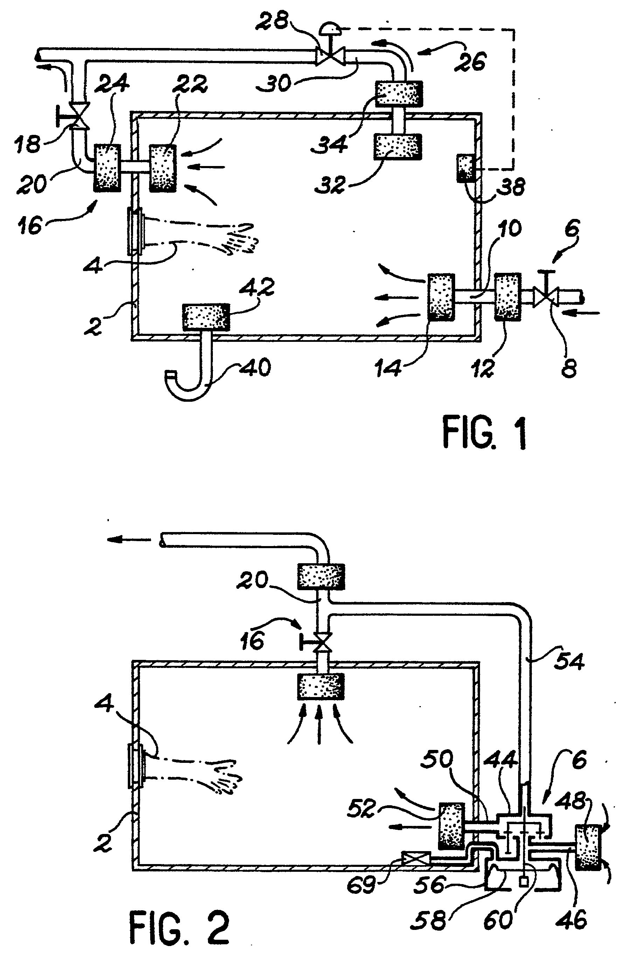

De tels dispositifs sont schématisés sur la vue en coupe de la figure 1 qui représente une boîte à gants équipée d'un dispositif de ventilation et d'un système de sécurité selon l'art antérieur. On voit sur cette figure une enceinte de confinement 2 qui, dans le cas présent, est une boîte à gants équipée de gants souples comme le gant 4 représenté schématiquement en traits mixtes. L'enceinte 2 est équipée d'un dispositif d'entrée d'air 6 qui se compose d'une vanne 8 montée sur une canalisation 10 équipée de deux filtres à très haute efficacité, à savoir un filtre 12 à l'extérieur de l'enceinte et un filtre 14 à l'intérieur. L'enceinte 2 comporte également un dispositif d'extraction d'air 16 qui se compose d'une vanne 18 montée sur une canalisation 20 sur laquelle se trouvent deux filtres : un filtre 22 à l'intérieur de l'enceinte et un filtre 24 à l'extérieur. Afin d'assurer un débit d'air suffisant en cas de diminution accidentelle de la dépression dans 1'enceinte, celle-ci comporte en outre un dispositif d'extraction de sécurité qui se compose d'une vanne 28 montée sur une canalisation 30 équipée elle aussi de deux filtres, un filtre 32 à l'intérieur de l'enceinte et un filtre 34 à l'extérieur. Comme on le voit sur la figure, la canalisation 30 est en communication avec la canalisation 20 d'extraction qui est la seule utilisée en fonctionnement normal. Comme on le voit également sur la figure 1, la vanne de sécurité 28 est commandée par une prise de dépression 38 placée à l'intérieur de l'enceinte.

Si le gant 4 se détériore ou se détache de son collier de fixation, ceci provoque une entrée d'air supplémentaire dans l'enceinte et donc une augmentation de la pression à l'intérieur de celle-ci. La prise de dépression 38 commande alors l'ouverture de la vanne de sécurité 28 induisant un débit d'air de sécurité dans la boîte à gants 2. Il en résulte alors une augmentation du débit d'air circulant dans l'enceinte, ce qui permet de maintenir la dépression dans celle-ci à un niveau raisonnable en attendant que les réparations nécessaires soient effectuées.

Le dispositif de sécurité est complété par une soupape 40 équipée d'un filtre 42 qui entre en action en cas d'augmentation accidentelle de la dépression à l'intérieur de l'enceinte 2, afin que l'air extérieur pénètre dans l'enceinte et maintienne la dépression à un niveau convenable.

Un dispositif de ventilation comme celui de la figure 1 présente l'inconvénient d'être assez encombrant puisqu'en plus du dispositif d'entrée d'air 6 et du dispositif d'extraction d'air 16, il faut installer le dispositif d'extraction de sécurité 26, la prise de dépression 38 et la soupape 40. Ceci complique l'installation et occupe de la place à l'intérieur de l'enceinte, ce qui est toujours gênant.

La présente invention a justement pour but de remédier à ces inconvénients en proposant une enceinte confinée avec un dispositif de ventilation moins encombrant que les dispositifs de l'art antérieur.

On connaît par ailleurs, par le brevet français FR-A 1 423 883, une vanne de régulation pour une enceinte en dépression, et par le brevet français FR-A 2 541 748, une vanne de sécurité pour le maintien d'une enceinte de confinement.

L'objet principal de l'invention est une enceinte confinée avec un dispositif de ventilation, comportant un dispositif d'entrée air avec un clapet de régulation, un dispositif d'extraction d'air et un clapet de sécurité de basse dépression; caractérisée en ce que le dispositif d'entrée air comprend un seul corps de vanne avec une équipage mobile qui agit à la fois sur le clapet de régulation et sur le clapet de sécurité de basse dépression.

Selon une autre caractéristique de l'invention, l'équipage mobile comprend une tige rigide, et les moyens pour déplacer le clapet de sécurité basse dépression lorsque la tige se déplace, comprennent:

– un orifice ménagé dans ce clapet et permettant le passage de la tige;

– un boîtier solidaire du clapet basse dépression et à l'intérieur duquel se trouve une extrémité de la tige; et

– un ressort disposé à l'intérieur du boîtier et agissant sur ladite extrémité de la tige.

Selon un mode de réalisation préféré de l'invention, l'enceinte comporte en outre des moyens pour interrompre l'arrivée d'air dans l'enceinte en cas de diminution de la dépression à l'intérieur de celle-ci, ces moyens pour contrôler et éventuellement interrompre l'arrivée d'air comprenant:

– une cloison séparant le corps de vanne en un compartiment amont et un compartiment aval;

– un orifice ménagé dans cette cloison et permettant le passage de ladite tige, le clapet de régulation, situé dans le compartiment aval, étant apte à obturer ledit orifice; et

– des moyens pour déplacer ledit clapet de régulation.

Dans le mode de réalisation préféré, les moyens pour déplacer le clapet de régulation comprennent:

– un ressort placé dans le compartiment aval et agissant sur le clapet de régulation pour le pousser vers l'orifice de manière à obturer ce dernier; et

– une entretoise cylindrique disposée concentriquement à la tige, cette entretoise se trouvant du côté amont de ladite cloison, étant solidaire de la tige en translation et étant apte à pousser le clapet de régulation à l'encontre de la force exercée par le ressort.

On peut également prévoir des moyens pour augmenter le débit d'entrée d'air dans l'enceinte en cas d'augmentation de la dépression à l'intérieur de celle-ci, ces moyens pour augmenter le débit d'entrée d'air comprenant, dans le mode de réalisation préféré :

- au moins un orifice mettant le corps de vanne en communication avec l'extérieur,

- un clapet de sécurité haute dépression apte à obturer cet orifice, et

- un ressort taré agissant sur ledit clapet.

L'invention apparaîtra mieux à la lecture de la description qui va suivre, donnée à titre d'exemple purement illustratif et nullement limitatif, en référence aux dessins annexés dans lesquels :

- la figure 1, déjà décrite, est une vue schématique en coupe d'une boîte à gants équipée d'un dispositif de ventilation selon l'art antérieur,

- la figure 2 est une vue schématique en coupe d'une boîte à gants équipée d'un dispositif de ventilation conforme à l'invention,

- la figure 3 est une vue schématique en coupe à plus grande échelle représentant le dispositif de l'invention en cas d'augmentation de la dépression dans l'enceinte, et

- la figure 4 est une vue semblable à la figure 3 représentant le dispositif de l'invention en cas de diminution de la dépression dans l'enceinte.

Sur la figure 2, on retrouve l'enceinte 2 équipée d'un ou plusieurs gants tels que 4. L'enceinte 2 est équipée d'un dispositif d'extraction d'air 16 semblable à celui de la figure 1, tandis que le dispositif d'introduction d'air 6 comporte tous les dispositifs de sécurité, conformément à l'invention. De plus, les dispositifs de sécurité assurent eux-mêmes la régulation du débit d'air dans l'enceinte, comme cela sera décrit plus en détail dans la suite de la présente description. Le dispositif d'introduction d'air 6 se compose d'un corps de vanne 44 dans lequel débouche une canalisation d'entrée d'air 46 équipée d'un filtre 48, tandis qu'une autre canalisation 50 équipée d'un filtre 52 met le corps de vanne 44 en communication avec l'intérieur de l'enceinte 2. Comme on le voit sur la figure 2, le dispositif 6 comporte en outre un caisson 56 placé à proximité immédiate du corps de vanne 44. Un piston 58 mobile à l'intérieur du caisson 56 sépare celui-ci en deux compartiments dont l'un est en communication avec l'intérieur de l'enceinte. Une tige 60 rendue solidaire du piston 58 se déplace en même temps que celui-ci et commande les dispositifs de sécurité en cas de variation accidentelle de la dépression à l'intérieur de la boîte à gants 2. De plus, la tige 60 agit également sur le clapet de régulation, comme cela sera explicité plus loin.

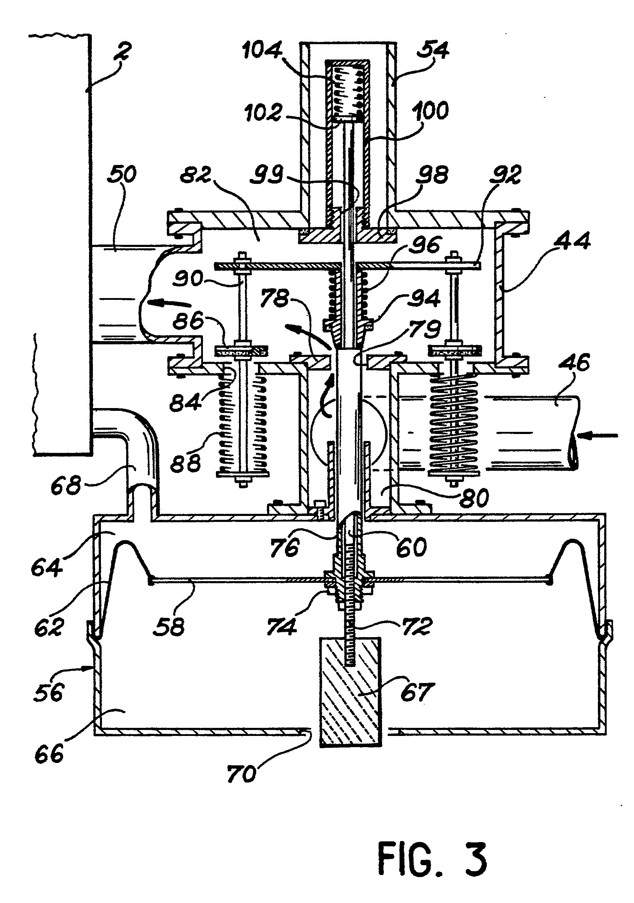

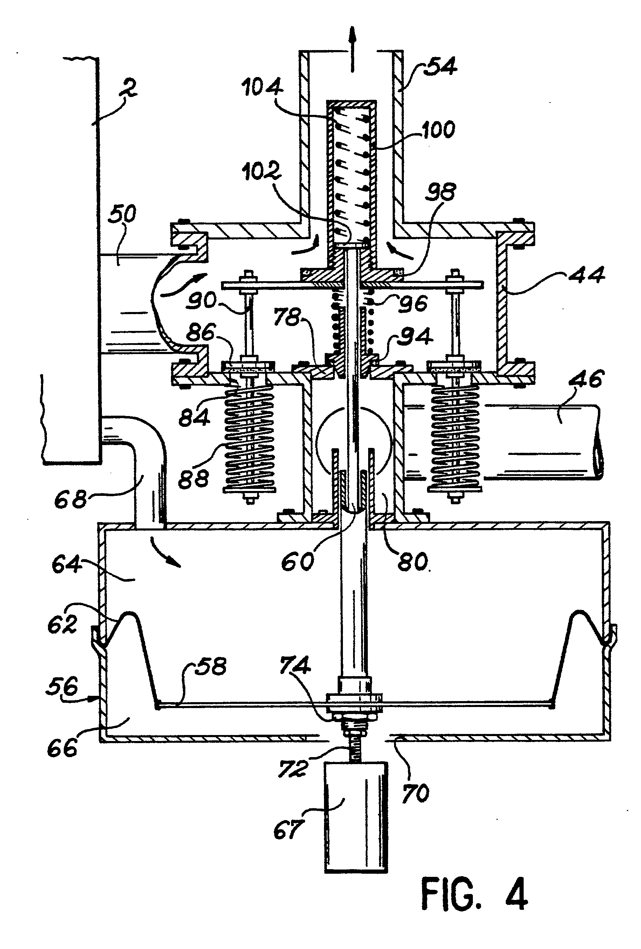

La structure et le fonctionnement du dispositif de l'invention vont maintenant être décrits plus en détail en référence aux figures 3 et 4. Le fonctionnement normal sera décrit en référence à la figure 3 bien que celle-ci représente le dispositif de l'invention en cas d'augmentation anormale de la dépression dans l'enceinte. En effet, en fonctionnement normal, les différents éléments du dispositif ont la position illustrée à la figure 3, à part que les clapets haute dépression 86 sont plaqués sur leurs sièges.

Si l'on se reporte à 1 figure 3, on voit le corps de vanne 44 dans lequel débouche la canalisation d'entrée d'air 46 tandis qu'une autre canalisation 50 met le corps de vanne 44 en communication evec l'intérieur de l'enceinte 2. On voit également le caisson 56 à l'intérieur duquel se déplace un piston rigide 58. Sur les bords de ce dernier est fixée une membrane 62 qui est également fixée aux parois du caisson, ce qui détermine à l'intérieur de celui-ci deux compartiments séparés de manière étanche. Comme, dans l'exemple représenté ici, le piston 58 est horizontal, on définit un compartiment supérieur 64 communiquant avec l'enceinte 2 par un tuyau 68 et un compartiment inférieur 66 communiquant avec l'atmosphère extérieure par une ouverture 70. Un filtre 69 est placé à l'intérieur de l'enceinte 2, à l'endroit où débouche le tuyau 68. Cette disposition a pour but de protéger le compartiment supérieur 64 contre la pollution ou la radioactivité régnant dans l'enceinte : on peut ainsi intervenir sans risque sur le caisson 56, par exemple pour remplacer la membrane 58. On voit encore sur la figure 3 la tige 60 qui est disposée verticalement et dont la partie inférieure comporte un filetage 72. Ceci permet de visser la tige 60 dans un écrou 74 solidaire du piston 58. Cet écrou se prolonge du côté du compartiment 64 par une entretoise cylindrique 76 qui entoure la tige 60.

A l'intérieur du corps de vanne 44 est disposée une cloison 78, percée d'un orifice 79, qui sépare le corps de vanne en un compartiment amont 80 dans lequel débouche la canalisation d'entrée 46 et un compartiment aval 82. Dans le mode de réalisation représenté ici, le caisson 56 est fixé au corps de vanne 44 du côté du compartiment amont, mais on ne sortirait pas du cadre de l'invention en imaginant un caisson 56 séparé du corps de vanne 54. Cependant, dans tous les cas, une partie de la tige 60 et de l'entretoise cylindrique 76 se trouve dans le compartiment amont du corps de vanne 44.

Dans le mode de réalisation préféré de l'invention, il est prévu dans le compartiment aval 82 du corps de vanne 44 deux ouvertures 84 mettant celui-ci en communication avec l'extérieur. Chaque ouverture 84 peut être obturée par un clapet de sécurité haute dépression 86 commandé par un ressort taré 88. Les clapets 86 sont reliés au moyen de tiges rigides 90 à une barre horizontale 92.

Un clapet de régulation 94 est monté sur la tige 60 concentriquement à celle-ci et peut coulisser le long de cette tige. Un ressort 96 monté autour du clapet 94 a une de ses extrémités fixée à la barre 92 et il est réglé pour pousser le clapet 94 en direction de l'ouverture 79 ménagée dans la paroi 78 afin d'obturer cette dernière.

On voit encore sur la figure la canalisation de sécurité 54 dont le point de départ se trouve à la partie supérieure du corps de vanne 44 dans le compartiment aval 82 de celui-ci. Un clapet de sécurité basse dépression 98 obture en fonctionnement normal l'entrée de la canalisation 54. Le clapet 98 possède une ouverture centrale 99 permettant le passage de la tige 60 tandis qu'un boîtier 100 est vissé sur le clapet 98 du côté de la canalisation 54. L'extrémité de la tige 60 opposée au piston 58 se trouve à l'intérieur de ce boîtier cylindrique 100 et elle est équipée d'une butée 102 tandis qu'un ressort 104 est disposé entre cette butée 102 et le fond du boîtier 100.

Le fonctionnement du dispositif de l'invention est le suivant :

En fonctionnement normal, étant donné que le compartiment 64 du caisson 56 est en communication avec l'intérieur de la boîte à gants 2 par le tuyau 68 et que le compartiment 66 est en communication avec l'extérieur, la pression est plus faible dans le compartiment 64. Ceci provoque la montée du piston 58 et, par conséquent, la montée de la tige 60 et de l'entretoise cylindrique 76. La longueur de cette dernière est prévue pour que, dans cette position, la partie supérieure de l'entretoise 76 pousse le clapet de régulation 94 à l'encontre de la force exercée par le ressort 96. Comme la tige 60 est solidaire de l'entretoise 76, la butée 102 prévue à l'extrémité de la tige 60 comprime le ressort 104 : c'est ce dernier qui assure la régulation du débit d'air dans l'enceinte comme on va le voir ci-dessous. L'action exercée par l'entretoise 76 sur le clapet de régulation 94 a pour effet d'ouvrir l'orifice 79 et de permettre le passage d'air de la canalisation d'entrée 46 jusqu'à la boîte à gants 2. D'autre part, comme la tige 60 est poussée vers le haut, ceci a pour effet de comprimer le ressort 104 prévu à l'intérieur du boîtier 100 et de pousser celui-ci vers le haut, c'est-à-dire à l'intérieur de la canalisation 54. Comme le boîtier 100 est solidaire du clapet de sécurité basse dépression 98, ce dernier est appliqué sur son siège, fermant ainsi l'entrée de la canalisation 54. Les ressorts 88 sont réglés pour que, en fonctionnement normal, les clapets de sécurité haute dépression 86 obturent les ouvertures 84. Le débit d'air dans l'enceinte, et par conséquent la dépression à l'intérieur de celle-ci, est obtenu en vissant plus ou moins la tige 60 dans l'écrou 74 solidaire de l'entretoise 76. En effet, si la tige est en position basse, le ressort 104 est détendu et oppose une faible résistance à la montée du clapet 94. Si la tige est plus haute, le ressort 104 est comprimé et oppose une plus grande résistance à la montée du clapet 94. C'est donc le ressort 104 qui assure la régulation du débit d'air dans l'enceinte alors que le ressort 96 a pour seul rôle d'appliquer le clapet 94 sur son siège. On peut également prévoir à 1a partie inférieure de 1a tige 60 un contrepoids 67 dans lequel est vissée la partie filetée 72 de cette tige, le débit d'air étant obtenu à la fois par un vissage convenable de la tige 60 dans l'ecrou 74 et un choix judicieux du contrepoids 67.

Si la dépression à l'intérieur de l'enceinte 2 diminue, par exemple en cas de rupture d'un gant, de l'air s'engouffre dans l'enceinte et il en résulte une augmentation de pression dans le compartiment 64 du caisson 56, ce qui a pour effet de pousser vers le bas 1e piston 58 (figure 4). La tige 60 et l'entretoise 76 sont entraînées vers le bas, ce qui a deux conséquences : d'une part, le ressort 96 pousse le clapet de régulation 94 vers l'orifice 79 puisque l'entretoise 76 ne fait plus obstacle au mouvement du clapet (figure 4). Si la tension du ressort 96 est convenablement réglée, le clapet 94 obture alors l'orifice 79. D'autre part, la butée 102 prévue à l'extrémité de la tige 60 opposée au piston 58 descend à l'intérieur du boîtier 100, ce qui a pour effet de détendre le ressort 104. On voit sur la figure 4 que cette butée 102 entraîne dans son mouvement le clapet de sécurité basse dépression 98, ce qui permet à l'air présent dans l'enceinte de passer à l'intérieur du corps de vanne 44 et, de là, dans la canalisation de sécurité 54, établissant ainsi un débit d'air de sécurité dans l'enceinte.

Si, au contraire, la dépression à l'intérieur de l'enceinte augmente, par exemple en cas d'obstruction d'une canalisation d'arrivée d'air, cette augmentation de dépression est transmise au compartiment 64 du caisson et le piston 58 est entraîné vers le haut. La tige 60 agit alors par l'intermédiaire du ressort 104 sur le boîtier 100 et le clapet basse dépression 98, et l'on revient à la position de la figure 3 où le clapet 98 obture l'entrée de la canalisation 54.

Cependant, l'entretoise cylindrique 76 pousse davantage le clapet de régulation 94 à l'encontre du ressort 96, ce qui augmente le débit d'air entrant dans le corps de vanne. Le clapet de régulation 94 vient en butée sur la barre 92 et pousse celle-ci vers le haut. Si le ressort 96 d'une part et les ressorts 88 d'autre part sont convenablement réglés, ceci provoque l'ouverture des clapets haute dépression 86, augmentant encore le débit d'air.

Ainsi, le dispositif de l'invention offre des avantages particulièrement intéressents dont le principal est d'être beaucoup moins encombrant que les dispositifs de l'art antérieur puisque tous les systèmes de sécurité se trouvent concentrés sur le dispositif d'introduction d'air. En effet, c'est le même dispositif qui assure simultanément trois fonctions, à savoir : régulation de la pression dans l'enceinte, sécurité en cas de diminution de la dépression et sécurité en cas d'augmentation de la dépression. On évite ainsi d'ajouter dans l'enceinte une soupape de sécurité et une vanne d'extraction supplémentaire, comme c'est le cas dans les dispositifs classiques. D'autre part, il faut vérifier régulièrement le fonctionnement des dispositifs de sécurité. Dans les installations actuelles, cette vérification n'est pas aisée car, pour contrôler le fonctionnement de la venne commandant le débit de sécurité, on est obligé de se mettre dans des conditions de perturbation du fonctionnement de l'installation, ce qui peut comporter certains risques. Au contraire, dans le dispositif de l'invention, ces vérifications peuvent se faire sans interrompre le déroulement d'une opération effectuée à l'intérieur de l'enceinte. Pour vérifier le fonctionnement des clapets 86, il suffit d'obstruer partiellement l'entrée d'air dans l'enceinte, ce qui provoque une augmentation momentanée de la dépression à l'intérieur de celle-ci : on peut voir facilement si les clapets 86 s'ouvrent ou non. Et, pour vérifier le fonctionnement du clapet de sécurité basse dépression 98, il suffit de soulever les clapets 86 en agissant sur les ressorts 88, ce qui entraîne une diminution de la dépression dans l'enceinte. Comme la masse 67 se trouve au moins partiellement en dehors du caisson 56, un déplacement de cette masse vers le bas d'une longueur déterminée signifie que le clapet 98 est décollé de son siège. Ces vérifications peuvent se faire en quelques secondes, sans perturber l'exploitation des enceintes et sans rompre le confinement.

On peut remplacer le système de sécurité haute dépression constitué par la barre 92 et les tiges 90 par un système constitué de la manière suivante : la barre 92 sur laquelle le clapet de régulation vient en butée est fixe par rapport au corps de vanne 44 tandis que le clapet 94 est lui-même directement relié aux tiges 90 par une pièce rigide. Quant au nombre de filtres équipant le dispositif et à leur emplacement, il est quelconque et dépend du degré de pollution à l'intérieur de l'enceinte.

## Revendications

1. Enceinte confinée avec un dispositif de ventilation, comportant un dispositif d'entrée air (6) avec un clapet de régulation (94), un dispositif d'extraction d'air (16) et un clapet de sécurité de basse dépression (98), caractérisée en ce que le dispositif d'entrée air (6) comprend un seul corps de vanne (44) avec un équipage mobile qui agit à la fois sur le clapet de régulation (94) et sur le clapet de sécurité de basse dépression (98).

2. Enceinte selon la revendication 1, dans laquelle l'équipage mobile comprend une tige rigide (60), caractérisée en ce que les moyens pour déplacer le clapet de sécurité basse dépression (98) lorsque la tige (60) se déplace comprennent:
   – un orifice (99) ménagé dans le clapet basse dépression (98) et permettant le passage de la tige (60);
   – un boîtier (100), solidaire du clapet basse dépression (98) et à l'intérieur duquel se trouve une extrémité de la tige (60);
   – un ressort (104) disposé à l'intérieur du boîtier (100) et agissant sur ladite extrémité de la tige (60).

3. Enceinte selon la revendication 2, caractérisée en ce qu'elle comporte en outre des moyens pour interrompre l'entrée d'air dans l'enceinte (2) en cas de diminution de la dépression à l'intérieur de celle-ci, ces moyens comprenant:
   – une cloison (78) séparant le corps de vanne (44) en un compartiment amont (80) et un compartiment aval (82);
   – un orifice (79) ménagé dans cette cloison (78) et permettant le passage de ladite tige (60), le clapet de régulation (94), situé dans le compartiment aval (82), étant apte à obturer ledit orifice (79), et
   – des moyens pour déplacer ledit clapet de régulation (94).

4. Enceinte selon la revendication 3, caractérisée en ce que lesdits moyens pour déplacer ledit clapet de régulation (94) comprennent:
   – un ressort (96) placé dans le compartiment aval (82) et agissant sur le clapet de régulation (94) pour le pousser vers l'orifice (79); et
   – une entretoise cylindrique (76) disposée concentriquement à la tige (60), cette entretoise (76) étant solidaire de la tige (60) en translation et étant apte à pousser le clapet de régulation (94) à l'encontre de la force exercée par le ressort (96).

5. Enceinte selon l'une quelconque des revendications 1 à 4, caractérisée en ce qu'elle comporte en outre des moyens pour augmenter le débit d'entrée d'air dans l'enceinte (2) en cas d'augmentation de la dépression à l'intérieur de celle-ci, ces moyens comprenant:
   – au moins un orifice (84) mettant le corps de vanne (44) en communication avec l'extérieur;
   – un clapet de sécurité haute dépression (86) apte à obturer ledit orifice (84); et
   – un ressort taré (88) agissant sur ledit clapet de sécurité haute dépression (86).

## Claims

1. Confined enclosure having a ventilation device comprising an air inlet device (6) provided with a regulation valve closure member (94), an air extraction device (16), and a low-vacuum safety valve closure member (98), characterized in that the air inlet device (6) comprises a single valve body (44) with a movable element which acts simultaneously on the regulation valve closure member (94) and on the low-vacuum safety valve closure member (98).

2. Enclosure according to Claim 1, in which the movable element comprises a rigid rod (60), characterized in that the means for displacing the low-vacuum safety valve closure member (98) when the rod (60) is displaced comprise:

    – an aperture (99) formed in the low-vacuum valve closure member (98) and permitting the passage of the rod (60);

    – a casing (100) which is fastened to the low-vacuum valve closure member (98) and inside which one end of the rod (60) is disposed;

    – a spring (104) disposed inside the casing (100) and acting on said end of the rod (60).

3. Enclosure according to Claim 2, characterized in that it additionally comprises means for interrupting the admission of air into the enclosure (2) in the event of the lowering of the vacuum in the interior of the latter, said means comprising:

    – a partition (78) dividing the valve body (44) into an upstream compartment (80) and a downstream compartment (82);

    – an aperture (79) formed in said partition (78) and permitting the passage of said rod (60), the regulation valve closure member (94) situated in the downstream compartment (82) being adapted to close said aperture (79), and

    – means for displacing said regulation valve closure member (94).

4. Enclosure according to Claim 3, characterized in that said means for displacing said regulation valve closure member (94) comprise:

    – a spring (96) disposed in the downstream compartment (82) and acting on the regulation valve closure member (94) to push it towards the aperture (79); and

    – a cylindrical brace (76) disposed concentrically to the rod (60), said brace (76) being arranged for translation with the rod (60) and being adapted to push the regulation valve closure member (94) against the force exerted by the spring (96).

5. Enclosure according to any one of Claims 1 to 4, characterized in that it additionally comprises means for increasing the inlet flow of air into the enclosure (2) in the event of a rise of the vacuum inside the latter, said means comprising:

    – at least one aperture (84) bringing the valve body (44) into communication with the outside;

    – a high-vacuum safety valve closure member (86) adapted to close said aperture (84); and

    – a calibrated spring (88) acting on said high-vacuum safety valve closure member (86).

**Patentansprüche**

1. Geschlossene Hülle mit einer Ventilationsvorrichtung mit einer Lufteintrittsvorrichtung (6) mit einem Regelventil (94), mit einer Luftaustrittsvorrichtung (16) und mit einem Niederdruck-Sicherheitsventil (98), dadurch gekennzeichnet, daß die Lufteintrittsvorrichtung (6) einen einzigen Ventilkörper (44) mit einem beweglichen Teil aufweist, das gleichzeitig sowohl auf das Regelventil (94) als auch auf das Niederdruck-Sicherheitsventil (98) wirkt.

2. Hülle nach Anspruch 1, bei der das bewegliche Teil einen steifen Schaft (60) umfaßt, dadurch gekennzeichnet, daß die Vorrichtung zum Betätigen des Niederdruck-Sicherheitsventils (98) für den Fall, daß der Schaft (60) sich betätigt, umfaßt:

    – eine in das Niederdruckventil (98) gearbeitete Öffnung (99), die den Durchgang des Schafts (60) ermöglicht;

    – ein mit dem Niederdruckventil (98) verbundenes Gehäuse (100), in dessen Innern sich ein Ende des Schafts (60) befindet;

    – eine im Innern des Gehäuses (100) angeordnete Feder (104), die auf das besagte Ende des Schafts (60) wirkt.

3. Hülle nach Anspruch 2, dadurch gekennzeichnet, daß sie außerdem eine Vorrichtung zum Unterbrechen des Lufteinlasses in die Hülle (2) für den Fall einer Verringerung des Unterdrucks innerhalb dieser aufweist, wobei diese Vorrichtung umfaßt:

    – eine Trennwand (78), die den Ventilkörper (44) in einen oberen (80) und einen unteren (82) Teil teilt;

    – eine in diese Trennwand (78) gearbeitete Öffnung (79), die den Durchgang des Schafts (60) ermöglicht, wobei das im oberen Teil (82) befindliche Regelventil (94) geeignet ist, die Öffnung (79) zu verschließen;

    – eine Vorrichtung zum Betätigen des Regelventils (94).

4. Hülle nach Anspruch 3, dadurch gekennzeichnet, daß die Vorrichtung zum Betätigen des Regelventils (94) aufweist:

    – eine im unteren Teil (82) angeordnete Feder (96), die auf das Regelventil (94) wirkt, um es gegen die Öffnung (79) zu drücken; und

    – ein zylinderförmiges, konzentrisch zum Schaft (60) angeordnetes Distanzstück (76), wobei dieses Distanzstück (76) in Translation mit dem Schaft verbunden ist und geeignet ist, das Regelventil (94) gegen die durch die Feder (96) ausgeübte Kraft zu drücken.

5. Hülle nach einem der Ansprüche 1 bis 4, dadurch gekennzeichnet, daß sie außerdem eine Vorrichtung zur Vergrößerung der Lufteinlaßmenge in die Hülle (2) für den Fall einer Vergrößerung des Unterdrucks in dieser aufweist, wobei diese Vorrichtung umfaßt:

    – wenigstens eine Öffnung (84), die den Ventilkörper (44) mit der Umgebung in Verbindung bringt;

    – ein Hochdruck-Sicherheitsventil (86), das geeignet ist, die Öffnung (84) zu verschließen; und

    – eine geeichte Feder (88), die auf das Hochdruck-Sicherheitsventil (86) wirkt.

FIG. 1

FIG. 2

EP 0 186 559 B1

FIG. 3

FIG. 4